# EUROPÄISCHE PATENTSCHRIFT

(11) **EP 3 911 708 B1**
(45) Veröffentlichungstag und Bekanntmachung des Hinweises auf die Patenterteilung: **15.06.2022**
(21) Anmeldenummer: 19713020.6
(22) Anmeldetag: 22.03.2019
(51) Int. Cl.: C08L 83/04, C08G 77/12, C08G 77/20

(54) **DURCH HYDROSILYLIERUNGSREAKTION VERNETZBARE MASSEN**
COMPOUNDS THAT CAN BE CROSSLINKED BY WAY OF HYDROSILYLATION REACTION
MASSES RÉTICULABLES PAR RÉACTION D'HYDROSILYLATION

(43) Veröffentlichungstag der Anmeldung: 24.11.2021
(73) Patentinhaber: Wacker Chemie AG, 81737 München (DE)
(72) Erfinder: ZICHE, Wolfgang, 84489 Burghausen (DE); WINTERER, Markus, 84359 Simbach (DE)
(74) Vertreter: Budczinski, Angelika
(86) Internationale Anmeldenummer: PCT/EP2019/057312
(87) Internationale Veröffentlichungsnummer: WO 2020/192873

(56) Entgegenhaltungen:
- WO-A1-2006/084585

## Beschreibung

Die vorliegende Erfindung betrifft durch Hydrosilylierungsreaktion vernetzbare Massen, insbesondere solche, die durch ultraviolette und/oder sichtbare Strahlung aktivierbare Platinkatalysatoren enthalten, deren Herstellung, ihre Verwendung sowie daraus hergestellte Vernetzungsprodukte, wie durch Bestrahlung hergestellte Siliconelastomere.

Im Allgemeinen erfolgt in additionsvernetzenden Siliconzusammensetzungen der Vernetzungsvorgang über eine Hydrosilylierungsreaktion, bei der als Katalysator üblicherweise Platin oder ein anderes Metall aus der Platingruppe eingesetzt wird. Bei der katalytisch ablaufenden Reaktion werden aliphatisch ungesättigte Gruppen mit Si-gebundenem Wasserstoff zur Reaktion gebracht, um die additionsvernetzbare Siliconzusammensetzung über den Aufbau eines Netzwerks in den elastomeren Zustand zu überführen.

Nach dem Stand der Technik erfolgt die Aktivierung der eingesetzten Katalysatoren normalerweise thermisch, d.h. die additionsvernetzbare Siliconzusammensetzung muss folglich für den Vernetzungsvorgang erwärmt werden. Dabei muss die Siliconzusammensetzung häufig auf ein Substrat aufgebracht werden, wie dies z.B. bei Beschichtungsvorgängen, bei ausgewählten Verguss-, Molding- und Co-Extrusions- oder sonstigen Formgebungsverfahren der Fall ist. Der eigentliche Vulkanisationsvorgang erfolgt in diesem Fall durch einen Erwärmungsprozess, für den oftmals kosten- und energieintensive Anlagen betrieben werden müssen.

Mit der Verwendung von Mischungen, die durch ultraviolette und/oder sichtbare Strahlung vernetzt werden können, geht demgegenüber bei vielen Applikationen eine teilweise erhebliche Kosteneinsparung einher. In der Folge kann eine Energie- und Prozesskosteneinsparung und damit eine entsprechende Produktivitätssteigerung erzielt werden. Zudem ermöglicht die Vernetzung über ultraviolette und/oder sichtbare Strahlung oftmals eine kontinuierliche Fertigung, die gegenüber einem diskontinuierlichen Batch-Prozess weitere Produktivitätsvorteile mit sich bringt. Ein weiterer Vorteil ergibt sich aus der Tatsache, dass insbesondere bei Mehrkomponentenbauteilen, wie beispielsweise Hart-Weich-Verbunden, die als Verbundpartner neben einem elastomeren Material beispielsweise einen Thermoplasten enthalten, durch den Verzicht auf einen temperaturintensiven Fertigungsschritt den thermisch bedingten Verzug des Bauteils verhindern.

In der Fachliteratur wird eine Vielzahl von Platinkomplexen beschrieben, die sich dazu eignen, durch Strahlung eine Hydrosilylierungsreaktion zu initiieren. Alle beschriebenen Platinkatalysatoren können durch Licht aktiviert werden und sind auch nach Abschalten der Lichtquelle dazu befähigt, Siliconzusammensetzungen zu vernetzen. Dieser Vorgang ist dem Fachmann als Dunkelreaktion bekannt.

Dunkelstabilität beschreibt hingegen, die Stabilität einer Zusammensetzung, die photoaktivierbare Katalysatoren enthält, im Dunklen, also letztlich die technisch erwünschte Lagerstabilität einer Zusammensetzung. Unzureichende Dunkelstabilität äußert sich beispielsweise durch einen Anstieg der Mischungsviskosität, wenn geringe Teile des Katalysators im Laufe der Lagerung zu hydrosilylierungsaktiven Spezies reagieren. Zudem kann der Katalysator während der Lagerung zu inaktiven Spezies abgebaut werden, womit eine lichtinduzierte Vernetzung nicht mehr erfolgen kann.

EP 146 307 B1 offenbart (η⁵-Cyclopentadienyl)tri(σ-alkyl)Platin(IV)-Komplexe, die sich durch eine gute Löslichkeit in der Siliconmatrix auszeichnen.

EP 1 803 728 A1 offenbart modifizierte (η⁵-Cyclopentadienyl)-tri(σ-alkyl)Platin(IV)-Komplexe, die am Cyclopentadienylring spezielle Substituenten (Naphtyl, Anthracenyl, etc.) tragen, um die Quantenausbeute zu erhöhen und um die zur Aktivierung benötigte Lichtwellenlänge ins Langwellige zu verschieben. Die Anbindung von aromatischen Ringen wirkt sich jedoch nachteilig auf die Löslichkeit der Komplexe in der Siliconmatrix aus.

EP 2 238 145 B1 beschreibt die Anbindung von (η⁵-Cyclopentadienyl)tri(σ-alkyl)Platin(IV)-Komplexen an Polymere, um die Flüchtigkeit dieser Verbindungsklasse zu reduzieren. EP-A 3 186 265 beschreibt Modifikationen des Cyclopentadienylliganden in (η⁵-Cyclopentadienyl)tri(σ-alkyl)Platin(IV)-Komplexen, die zur Erhöhung der Dunkelstabilität beitragen.

Das Dokument WO 2006/084585 offenbart vernetzbare Massen, die Säurefänger enthalten und durch hydrosilylierung vernetzt werden können.

Zusammenfassend kann festgestellt werden, dass keine der bislang bekannten über sichtbare und/oder UV-Strahlung vernetzbare Siliconzusammensetzungen in befriedigender Weise den Anforderungen gerecht wird, die an derartige Siliconzusammensetzungen, die insbesondere zur Herstellung im industriellen Umfeld herangezogen werden können, gestellt werden.

Eine Aufgabe der vorliegenden Erfindung war es daher die Bereitstellung von Siliconzusammensetzungen, welche die oben genannten Nachteile, insbesondere die unzureichende Dunkelstabilität, nicht aufweisen.

Gegenstand der Erfindung sind Platin katalysierte durch Hydrosilylierungsreaktion vernetzbare Massen, dadurch gekennzeichnet, dass der Gehalt starker Säuren (S) mit einem pKs-Wert < 2,5 kleiner 0,3 Gew.-ppm ist.

Im Rahmen der vorliegenden Erfindung soll unter dem Begriff "vernetzbar" jede Art von durch Hydrosilylierungsreaktion entstehende Bindungen verstanden wurden, unabhängig davon, ob diese Teil eines Netzwerks sind oder nicht.

Die Säuren, die als starke Säuren (S) in Frage kommen, sind dem Fachmann umfassend bekannt, z.B. aus Nachschlagewerken, und werden üblicherweise mit pKs-Werten beschrieben, wobei die pKs-Werte in wässrigem Medium bestimmt werden. Hierzu sei z.B. auf die EPA-Publikation: "Product Properties Test Guidelines OPPTS 830.7370 Dissociation Constants in Water" verwiesen.

Bevorzugt handelt es sich bei den starken Säuren (S) um solche mit einem pKₛ-Wert kleiner 1,5, besonders bevorzugt mit einem pKₛ-Wert kleiner 0.

Beispielsweise handelt es sich bei den starken Säuren (S) um Chlorwasserstoff, Alkyl- und Arylsulfonsäuren, wie p-Toluolsulfonsäure, Methansulfonsäure und Trifluormethansulfonsäure, Schwefelsäure und säureaktivierte Bleicherden, wie Tonsil^{®} Supreme 114 FF (Hersteller Clariant).

Insbesondere handelt es sich bei den starken Säuren (S) um solche ausgewählt aus Chlorwasserstoff, Methansulfonsäure, Trifluormethansulfonsäure, Schwefelsäure und säureaktivierten Bleicherden, ganz besonders bevorzugt um Chlorwasserstoff.

Eine bevorzugte Ausführungsform der Erfindung betrifft Platin katalysierte durch Hydrosilylierungsreaktion vernetzbare Massen, dadurch gekennzeichnet, dass der Gehalt starker Säuren (S), ausgewählt aus Chlorwasserstoff, Methansulfonsäure, Trifluormethansulfonsäure, Schwefelsäure und säureaktivierter Bleicherden, bevorzugt Chlorwasserstoff, kleiner 0,3 Gew.-ppm ist.

Bevorzugt werden starke Säuren (S) in Siliconmassen über die Rohstoffe eingeführt und stammen insbesondere aus Herstellprozessen der Rohstoffe der erfindungsgemäßen Zusammensetzungen. So werden z.B. saure Katalysatoren wie Phosphornitrilchloride zur Herstellung von Polydimethylsiloxanen verwendet, zum größten Teil z.B. mit Aminen neutralisiert, wobei Ammoniumchloride entstehen; es ist jedoch möglich, dass im Laufe der Zeit in Polydimethylsiloxane eingebaute PNCl₂-Einheiten hydrolysieren und so Chlorwasserstoff freisetzen. Des Weiteren können eingesetzte Feststoffe wie z.B. pyrogene Kieselsäuren, hergestellt aus Chlorsilanen, Restmengen an siliciumgebundenem Chlor oder adsorbiertem Chlorwasserstoff enthalten. Durch Hydrolyse und/oder Desorption wird dann Chlorwasserstoff freigesetzt.

In den erfindungsgemäßen Zusammensetzungen ist der Gehalt starker Säuren (S) bevorzugt kleiner 0,2 Gew.-ppm, besonders bevorzugt kleiner 0,1 Gew.-ppm, insbesondere 0.

Bevorzugt handelt es sich bei den erfindungsgemäßen Massen um solche, enthaltend
(i) mindestens eine Verbindung ausgewählt aus der Gruppe enthaltend die Verbindungen (A), (B) und (C), wobei
   (A) eine organische Verbindung und/oder eine siliziumorganische Verbindung enthaltend mindestens einen Rest mit aliphatischer Kohlenstoff-Kohlenstoff-Mehrfachbindung,
   (B) eine siliziumorganische Verbindung enthaltend mindestens ein Si-gebundenes Wasserstoffatom, und
   (C) eine siliziumorganische Verbindung enthaltend SiC-gebundene Reste mit aliphatischen Kohlenstoff-Kohlenstoff-Mehrfachbindungen und Si-gebundene Wasserstoffatome bedeuten,
      mit der Maßgabe, dass die Massen mindestens eine Verbindung mit aliphatischen Kohlenstoff-Kohlenstoff-Mehrfachbindungen und mindestens eine Verbindung mit Si-gebundenen Wasserstoffatomen enthält, und
(ii) mindestens einen
   (D) Platinkatalysator,
   mit der Maßgabe, dass der Gehalt starker Säuren (S) mit einem pKs-Wert < 2,5 kleiner 0,3 Gew.-ppm ist.

Die in den erfindungsgemäßen Massen eingesetzten Verbindungen (A), (B) und (C) werden gemäß dem Stand der Technik bevorzugt so ausgewählt, dass diese in einen vernetzten Zustand überführt werden können. So kann beispielsweise Verbindung (A) mindestens zwei aliphatisch ungesättigte Reste aufweisen und (B) mindestens drei Si-gebundene Wasserstoffatome, oder Verbindung (A) kann mindestens drei aliphatisch ungesättigte Reste aufweisen und Siloxan (B) mindestens zwei Si-gebundene Wasserstoffatome, oder anstelle von Verbindung (A) und (B) kann ein Siloxan (C) eingesetzt werden, welches aliphatisch ungesättigte Reste und Si-gebundene Wasserstoffatome aufweist, so dass eine Vernetzung der Komponenten erfolgen kann. Möglich sind zudem Mischungen aus (A), (B) und (C) von aliphatisch ungesättigten Resten und Si-gebundenen Wasserstoffatomen.

Die Mengenverhältnisse der erfindungsgemäß eingesetzten Komponenten (A), (B) und (C) entspricht denen, die aus dem Stand der Technik bekannt sind. Der Platinkatalysator (D) wird in solchen Mengen verwendet, dass bezogen auf den Pt(0)-Gehalt, ebenfalls die aus dem Stand der Technik bekannten Katalysatormengen in der erfindungsgemäßen Zusammensetzung enthalten sind.

Bei der erfindungsgemäß eingesetzten Verbindung (A) kann es sich um siliciumfreie organische Verbindungen mit vorzugsweise mindestens zwei aliphatisch ungesättigten Gruppen sowie um Organosiliciumverbindungen mit vorzugsweise mindestens zwei aliphatisch ungesättigten Gruppen handeln oder auch um Mischungen daraus.

Beispiele für siliciumfreie organische Verbindungen (A) sind, 1,3,5-Trivinylcyclohexan, 2,3-Dimethyl-1,3-butadien, 7-Methyl-3-methylen-1,6-octadien, 2-Methyl-1,3-butadien, 1,5-Hexadien, 1,7-Octadien, 4,7-Methylen-4,7,8,9-tetrahydroinden, Methylcyclopentadien, 5-Vinyl-2-norbornen, Bicyclo[2.2.1]hepta-2,5-dien, 1,3-Diisopropenylbenzol, vinylgruppenhaltiges Polybutadien, 1,4-Divinylcyclohexan, 1,3,5-Triallylbenzol, 1,3,5-Trivinylbenzol, 1,2,4-Trivinylcyclohexan, 1,3,5-Triisopropenylbenzol, 1,4-Divinylbenzol, 3-Methyl-heptadien-(1,5), 3-Phenyl-hexadien-(1,5), 3-Vinyl-hexadien-(1,5 und 4,5-Dimethyl-4,5-diethyl-octadien-(1,7), N,N'-Methylen-bis-acrylsäureamid, 1,1,1-Tris(hydroxymethyl)-propan-triacrylat, 1,1,1-Tris(hydroxymethyl)propan-trimethacrylat, Tripropylenglykol-diacrylat, Diallylether, Diallylcarbonat, N,N'-Diallylharnstoff, Polyethylenglykoldiacrylat und Polyethylenglykol Dimethacrylat.

Vorzugsweise enthalten die erfindungsgemäßen Siliconzusammensetzungen als Bestandteil (A) mindestens eine aliphatisch ungesättigte Organosiliciumverbindung, wobei alle bisher in additionsvernetzenden Zusammensetzungen verwendeten, aliphatisch ungesättigten Organosiliciumverbindungen eingesetzt werden können. Ist (A) eine Organosiliciumverbindung, die SiC-gebundene Reste mit aliphatischen Kohlenstoff-Kohlenstoff-Mehrfachbindungen aufweist, so handelt es sich dabei vorzugsweise um solche aus Einheiten der allgemeinen Formel

R¹¹ₐR¹²_{b}SiO_{(4-a-b)/2} (IV),

wobei
R¹¹ gleich oder verschieden sein kann und Hydroxylrest oder einen monovalenten, gegebenenfalls substituierten, aliphatisch gesättigten Kohlenwasserstoffrest mit 1 bis 20 Kohlenstoffatomen bedeutet,
R¹² gleich oder verschieden sein kann und einen monovalenten, aliphatisch ungesättigten, gegebenenfalls substituierten Kohlenwasserstoffrest mit 2 bis 10 Kohlenstoffatomen darstellt,
a 0, 1, 2 oder 3, bevorzugt 1 oder 2, ist,
b 0, 1, 2 oder 3, bevorzugt 0 oder 1, ist,
mit der Maßgabe, dass die Summe a+b ≤ 3 ist und pro Molekül mindestens ein aliphatisch ungesättigter Rest R¹² enthalten ist, bevorzugt mindestens zwei aliphatisch ungesättigte Reste R¹² enthalten sind.

In Organosiliciumverbindungen (A) aus Einheiten der Formel (IV) sind bevorzugt keine Einheiten mit b verschieden 0 miteinander verbunden.

Beispiele für Reste R¹¹ sind Alkylreste, wie Methyl-, Ethyl-, Propyl-, Isopropyl-, tert.-Butyl-, n-Pentyl-, iso-Pentyl-, neoPentyl-, tert.-Pentyl-, n-Octyl-, 2-Ethylhexyl-, 2,2,4-Trimethylpentyl-, n-Nonyl- und Octadecylrest; Cycloalkylreste, wie Cyclopentyl-, Cyclohexyl-, Cycloheptyl-, Norbornyl-, Adamantylethyl- oder Bornylrest; Aryl- oder Alkarylreste, wie Phenyl-, Ethylphenyl-, Tolyl-, Xylyl-, Mesityl- oder Naphthylrest; Aralkylreste, wie Benzyl-, 2-Phenylpropyl- oder Phenylethylrest, sowie 3,3,3-Trifluorpropyl-, 3-Iodopropyl-, 3-Isocyanatopropyl-, Aminopropyl-, Methacryloxymethyl- oder Cyanoethylrest.

Bevorzugt handelt es sich bei den Resten R¹¹ um gegebenenfalls mit Halogenatomen oder Cyanogruppen substituierte Kohlenwasserstoffreste mit 1 bis 20 Kohlenstoffatomen, besonders bevorzugt um Methyl-, Phenyl-, 3,3,3-Trifluorpropyl- oder Cyanoethylrest, insbesondere um den Methylrest .

Beispiele für Reste R¹² sind Alkenyl- und Alkinylreste, wie Vinyl-, Allyl-, Isopropenyl-, 3-Butenyl-, 2,4-Pentadienyl-, Butadienyl-, 5-Hexenyl-, Undecenyl-, Ethinyl-, Propinyl- und Hexinylrest; Cycloalkenylreste, wie Cyclopentenyl-, Cyclohexenyl-, 3-Cyclohexenylethyl-, 5-Bicycloheptenyl-, Norbornenyl-, 4-Cyclooctenyl- oder Cyclooctadienylrest; Alkenylarylreste, wie Styryl- oder Styrylethylrest, sowie halogenierte und Heteroatome enthaltende Derivate der voranstehenden Reste, wie 2-Bromvinyl-, 3-Brom-1-propinyl-, 1-Chlor-2-methylallyl-, 2-(Chlormethyl)allyl-, Allyloxypropyl- oder 1-Methoxyvinylrest.

Bevorzugt handelt es sich bei den Resten R¹² um Kohlenwasserstoffreste mit 2 bis 10 Kohlenstoffatomen, die eine endständige Kohlenstoff-Kohlenstoff-Doppelbindung aufweisen, besonders bevorzugt um den Vinyl-, Allyl- oder 5-Hexenylrest, insbesondere um den Vinylrest.

Beispiele für Komponente (A) sind 1,1,1,2,2,3,3,3-heptamethyl-2-vinyl-trisiloxan, Me₃Si-O-(SiMe₂O)ₓ-SiMe₂(CH=CH₂) mit x≥0, (CH=CH₂)Me₂Si-O-(SiMe₂O)ₓ-SiMe₂(CH=CH₂) mit x>0, Me₃Si-O-(SiMe₂O)ₓ-(SiMe(CH=CH₂)O)_{y}-SiMe₃ mit x>0 und y>0 sowie (CH=CH₂)Me₂Si-O-(SiMe₂O)ₓ-(SiMe(CH=CH₂)O)_{y}-SiMe₂(CH=CH₂) mit x>0 und y>0 mit Me gleich Methylrest.

Die erfindungsgemäß eingesetzten Organosiliciumverbindungen (A) haben bei 25°C eine Viskosität von bevorzugt 1 bis 40 000 000 mPa·s, besonders bevorzugt, 50 bis 1 000 000 mPa·s.

Die Viskositäten werden gemäß DIN EN ISO 3219: 1994 (Polymere/Harze in flüssigem, emulgiertem oder dispergiertem Zustand) und DIN 53019 (Messung von Viskositäten und Fließkurven mit Rotationsviskosimetern) an einem Rotationsrheometer mit Luftlagerung von Anton Paar MCR301 mit Platte-/Kegelsystemen bei 25°C bestimmt.

Als Organosiliciumverbindung (B) können alle hydrogenfunktionellen Organosiliciumverbindungen eingesetzt werden, die auch bisher in additionsvernetzbaren Zusammensetzungen eingesetzt worden sind.

Organosiliciumverbindungen (B), die SiH-gebundene Wasserstoffatome enthalten, sind vorzugsweise solche aus Einheiten der allgemeinen Formel

R¹³_{c}H_{d}SiO_{(4-c-d)/2} (V),

wobei
R¹³ gleich oder verschieden sein kann und eine für Rest R¹¹ angegebene Bedeutung hat,
c 0, 1, 2 oder 3, bevorzugt 1 oder 2, ist und
d 0, 1 oder 2, bevorzugt 1 oder 0, ist,
mit der Maßgabe, dass die Summe c+d<4 ist und die Organosiliciumverbindung pro Molekül mindestens ein Si-gebundenes Wasserstoffatom aufweist, bevorzugt mindestens zwei Si-gebundene Wasserstoffatome.

Beispiele für Komponente (B) sind 1,1,1,2,2,3,3,3-heptamethyltrisiloxan, Me₃Si-O-(SiMe₂O)ₓ-SiMe₂H mit x≥0, Tetramethyldisiloxan, HMe₂Si-O-(SiMe₂O)ₓ-SiMe₂H mit x>0, Me₃Si-O-(SiMe₂O)ₓ-(SiMeHO)_{y}-SiMe₃ mit x>0 und y>0 und HMe₂Si-O-(SiMe₂O)ₓ-(SiMeHO)_{y} -SiMe₂H mit x>0 und y>0 mit Me gleich Methylrest.

Die erfindungsgemäß eingesetzten Organosiliciumverbindungen (B) haben bei 25°C eine Viskosität von bevorzugt 100 bis 40 000 000 mPa·s, besonders bevorzugt 1000 bis 500 000 mPa·s.

Vorzugsweise sind Bestandteile (A), (B) oder (C) in einer solchen Menge in den erfindungsgemäßen vernetzbaren Massen enthalten, dass das Molverhältnis von SiH-Gruppen zu aliphatisch ungesättigten Gruppen bei 0,1 bis 20, besonders bevorzugt bei 1,0 bis 5,0, liegt.

Anstelle von Komponente (A) und (B) können die erfindungsgemäßen Massen Organosiliciumverbindungen (C), die gleichzeitig aliphatische Kohlenstoff-Kohlenstoff-Mehrfachbindungen und Si-gebundene Wasserstoffatome aufweisen, enthalten. Auch können die erfindungsgemäßen Massen alle drei Komponenten (A), (B) und (C) enthalten. Falls Organosiliciumverbindungen (C) eingesetzt werden, handelt es sich vorzugsweise um solche aus Einheiten der allgemeinen Formeln

R¹¹gSiO_{4-g/2} (VII),

R¹¹ₕR¹²SiO_{3-h/2} (VIII)

und

R¹¹ᵢHSiO_{3-i/2} (IX),

wobei R¹¹ und R¹² gleich oder verschieden sein können und die oben dafür angegebene Bedeutung haben,
g 0, 1, 2 oder 3 ist,
h 0, 1 oder 2 ist und
i 0, 1 oder 2 ist, mit der Maßgabe, dass je Molekül mindestens 2 Reste R¹² und mindestens zwei Si-gebundene Wasserstoffatome vorliegen.

Beispiele für Organopolysiloxane (C) sind solche aus SiO_{4/2}, R¹¹₃SiO_{1/2}-, R¹¹₂R¹²SiO_{1/2}- und R¹¹₂HSiO_{1/2}- Einheiten, sogenannte MQ-Harze, wobei diese Harze zusätzlich R¹¹SiO_{3/2}- und R¹¹₂SiO_{2/2}-Einheiten enthalten können, sowie lineare Organopolysiloxane im Wesentlichen bestehend aus R¹¹₂R¹²SiO_{1/2}-, R¹¹₂SiO_{2/2}- und R¹¹HSiO_{2/2}-Einheiten mit R¹¹ und R¹² gleich der obengenannten Bedeutung.

Die Organopolysiloxane (C) besitzen vorzugsweise eine Viskosität von 0,01 bis 500 000 mPa·s, besonders bevorzugt 0,1 bis 100 000 mPa·s, jeweils bei 25°C.

Die erfindungsgemäß eingesetzten Komponenten (A), (B) und (C) sind handelsübliche Produkte bzw. nach in der Chemie gängigen Verfahren herstellbar.

Bevorzugt handelt es sich bei den Platinkatalysatoren (D) um solche der Formel

R¹₃Pt{CpR²₅} (I),

wobei
**Cp** Cyclopentadienylrest bedeutet,
**R¹** gleich oder verschieden sein kann und einen monovalenten, gegebenenfalls substituierten, aliphatisch gesättigten Kohlenwasserstoffrest bedeutet und
**R²** gleich oder verschieden sein kann und Wasserstoffatom, SiCgebundener Silylrest oder einen einwertigen, gegebenenfalls substituierten Kohlenwasserstoffrest bedeutet. Cyclopentadienylrest Cp ist in der Literatur allgemein bekannt. Vorzugsweise soll unter Cyclopentadienylrest Cp im Rahmen der vorliegenden Erfindung das Cyclopentadienyl-Anion verstanden werden, welches aus einem einfach negativ geladenen, aromatischen Fünfringsystem C₅R'₅⁻ besteht. Cylcopentadienylplatinkomplexe im Sinne der Erfindung enthalten einen an ein platinhaltiges Fragment M η⁵-gebundenen Cyclopentadienylrest, 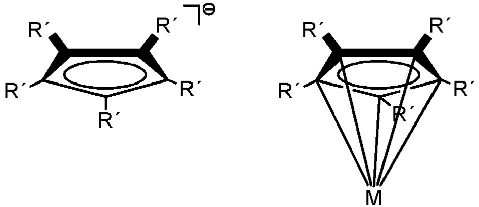
wobei R' beliebige Reste darstellt, die zur Bildung anellierter Ringe auch miteinander verbunden sein können.

Beispiele für Reste R¹ sind die für Rest R¹¹ oben angegebenen Beispiele.

Bevorzugt handelt es sich bei Rest R¹ um gegebenenfalls mit Silylresten substituierte Kohlenwasserstoffreste, besonders bevorzugt um Methyl-, Trimethylsilyl-methyl-, Cyclohexyl-, Phenylethyl- oder tert-Butylreste, insbesondere um Methyl-, Trimethylsilyl-methyl- oder Cyclohexylreste, ganz besonders bevorzugt um den Methylrest.

Rest R² gleich gegebenenfalls substituierter Kohlenwasserstoffrest ist ein- oder mehrwertig, bevorzugt einwertig. Zwei oder mehrere einwertige Reste R² können auch einen oder mehrere Ringe bilden, die mit dem Cyclopentadienylrest anelliert sind und aromatisch, gesättigt oder aliphatisch ungesättigt sein können. Es kann auch ein mehrwertiger Rest R² über mehr als eine Stelle an den Cyclopentadienylrest gebunden sein und einen oder mehrere Ringe bilden, die mit dem Cyclopentadienylrest anelliert sind und aromatisch, gesättigt oder aliphatisch ungesättigt sein können.

Beispiele für Reste R² sind die für Reste R¹¹ und R¹² oben angegebenen Beispiele sowie Wasserstoffrest, Vinyldimethylsilylrest, Allyldimethylsilylrest, Trimethoxysilyl-methylrest, Trimethoxysilyl-propylrest, Methyldimethoxysilyl-methylrest, Methyldimethoxysilyl-propylrest und Methyl-bis-(polydimethylsiloxy)silyl-propylrest.

Bevorzugt handelt es sich bei Rest R² um Wasserstoffatom, SiCgebundenen Silylrest oder gegebenenfalls mit Silylresten substituierte Kohlenwasserstoffreste, besonders bevorzugt um Wasserstoffatom, Methylrest, Allyldimethylsilylrest, Methyldimethoxysilyl-methylrest, Methyldimethoxysilyl-propylrest oder Methyl-bis-(polydimethylsiloxy)silyl-propylrest, insbesondere um Wasserstoffatom, Methylrest, Allyldimethylsilylrest, Methyldimethoxysilyl-propylrest oder Methyl-bis-(polydimethylsiloxy)silyl-propylrest, ganz besonders bevorzugt um Wasserstoffatom, Methylrest oder Methyl-bis-(polydimethylsiloxy)silyl-propylrest.

Beispiele für erfindungsgemäß eingesetzte Platinkomplexe (D) sind die in EP 2 238 145 B1, Absätze [22] bis [25] sowie Absätze [30] bis [31] und EP 3 186265 B, Absätze [37] bis [38] genannten, die zum Offenbarungsgehalt der Erfindung zu zählen sind.

Bevorzugt handelt es sich bei den erfindungsgemäß eingesetzten Platinkomplexen (D) um CpMePtMe₃, [(H₂C=CH-CH₂)Me₂SiCp]PtMe₃, CpPtMe₃, Trimethyl[(3-Diethoxymethylsilyl)propyl-(allyldime-thylsilyl)cyclopentadienyl]-platin(IV), Trimethyl[(3-Diethoxy-methylsilyl)propyl-cyclopentadienyl]-platin(IV), Trimethyl[(3-bis(polydimethylsiloxy)methylsilyl)propyl-(allyldimethylsilyl)-cyclopentadienyl]-platin(IV) oder Trimethyl[(3-bis(polydimethylsiloxy)methylsilyl)propyl-cyclopentadienyl]-platin(IV), besonders bevorzugt um CpMePtMe₃, Trimethyl[(3-Diethoxymethyl-silyl)propyl-(allyldimethylsilyl)cyclopentadienyl]-platin (IV), Trimethyl[(3-Diethoxymethylsilyl)propyl-cyclopentadienyl]-platin(IV), Trimethyl[(3-bis(polydimethylsiloxy)methylsilyl)propyl-(allyldimethylsilyl)cyclopentadienyl]-platin(IV) oder Trimethyl[(3-bis(polydimethylsiloxy)methylsilyl)propyl-cyclopentadienyl]-platin(IV), insbesondere um CpMePtMe₃, Trimethyl[(3-bis(polydimethylsiloxy)methylsilyl)propyl-(allyldimethylsilyl)-cyclopentadienyl]-platin(IV) oder Trimethyl[(3-bis(polydimethylsiloxy)methylsilyl)propyl-cyclopentadienyl]-platin(IV), wobei unter "polydimethylsiloxy" Polydimethylsiloxaneinheiten -(SiMe₂O)ₓ- mit x=100-400 zu verstehen sind mit Me gleich Methylrest bedeutet.

Die Menge des eingesetzten Platinkatalysators (D) richtet sich nach der gewünschten Vernetzungsgeschwindigkeit sowie ökonomischen Gesichtspunkten. Üblicherweise werden pro 100 Gewichtsteile vernetzbare Masse bevorzugt 1·10⁻⁵ bis 5·10⁻² Gewichtsteile, besonders bevorzugt 1·10⁻⁴ bis 1·10⁻² Gewichtsteile, insbesondere 5·10⁻⁴ bis 5·10⁻³ Gewichtsteile, Platinkatalysator (D), jeweils berechnet als Platin-Metall, eingesetzt.

Neben den oben genannten Komponenten (A), (B), (C) und (D) können in den erfindungsgemäßen Massen noch weitere Komponenten, wie z.B. Inhibitoren und Stabilisatoren (E), Füllstoffe (F), und Zusatzstoffe (G), enthalten sein.

Komponenten (E) dienen der gezielten Einstellung der Verarbeitungszeit, dem Anspringverhalten und der Vernetzungsgeschwindigkeit der erfindungsgemäßen Massen. Diese Inhibitoren und Stabilisatoren sind auf dem Gebiet der additionsvernetzenden Zusammensetzungen sehr gut bekannt. Beispiele gebräuchlicher Inhibitoren sind acetylenische Alkohole, wie 1-Ethinyl-1-cyclohexanol, 2-Methyl-3-butin-2-ol und 3,5-Dimethyl-1-hexin-3-ol, 3-Methyl-1-dodecin-3-ol, Polymethylvinylsiloxane, die benachbarte Siloxy-Gruppen mit Resten mit aliphatischen Kohlenstoff-Kohlenstoff-Mehrfachbindungen enthalten, die inhibierend wirken, wie beispielsweise 1,3,5,7-Tetravinyltetramethyltetracyclosiloxan, Divinyltetramethyldisiloxan und Tetravinyldimethyldisiloxan, Trialkylcyanurate, Alkylmaleate, wie Diallylmaleat, Dimethylmaleat und Diethylmaleat, Alkylfumarate, wie Diallylfumarat und Diethylfumarat, organische Hydroperoxide wie Cumolhydroperoxid, tert-Butylhydroperoxid und Pinanhydroperoxid, organische Peroxide, organische Sulfoxide, organische Amine, Diamine und Amide, Phosphane und Phosphite, Nitrile, Triazole, Diaziridine und Oxime.

Bevorzugt handelt es sich bei Komponente (E) um acetylenische Alkohole oder Alkylmaleate.

Die Wirkung dieser Inhibitorzusätze (E) hängt von ihrer chemischen Struktur ab, so dass die Konzentration individuell bestimmt werden muss. Falls Inhibitoren (E) eingesetzt werden, handelt es sich um Mengen von vorzugsweise 0,00001 bis 5 Gew.-%, bevorzugt 0,00005 bis 2 Gew.-%, besonders bevorzugt 0,0001 bis 1 Gew.-%, jeweils bezogen auf das Gesamtgewicht der erfindungsgemäßen Masse. Die erfindungsgemäßen Massen enthalten bevorzugt Komponente (E).

Bei den in den erfindungsgemäßen Massen gegebenenfalls eingesetzten Füllstoffen (F) kann es sich um beliebige, bisher bekannte Füllstoffe handeln.

Beispiele für Füllstoffe (F) sind nicht verstärkende Füllstoffe, also Füllstoffe mit einer BET-Oberfläche von vorzugsweise bis zu 50 m²/g, wie Quarz, Diatomeenerde, Calciumsilikat, Zirkoniumsilikat, Talkum, Kaolin, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie gefällte Kreide, Ruß, wie Furnace- und Acetylenruß und Silicium-Aluminium-Mischoxide großer BET-Oberfläche; Aluminiumtrihydroxid, hohlkugelförmiger Füllstoffe, wie keramische Mikrokugel, wie z.B. solche erhältlich unter der Handelsbezeichnung Zeeospheres^{™} bei der Fa. 3M Deutschland GmbH in D-Neuss, elastische Kunststoffkugeln, wie etwa solche erhältlich unter der Handelsbezeichnung EXPANCEL^{®} bei der Fa. AKZO NOBEL, Expancel in Sundsvall, Schweden, oder Glaskugeln; faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Falls die erfindungsgemäßen Massen Füllstoffe (F) enthalten, handelt es sich bei diesen vorzugsweise um pyrogene und gefällte Kieselsäuren mit BET-Oberflächen von mindestens 50 m²/g.

Gegebenenfalls eingesetzte Füllstoffe (F) haben einen Feuchtigkeitsgehalt von bevorzugt unter 1 Gew.-%, besonders bevorzugt von unter 0,5 Gew.-%.

Falls die erfindungsgemäßen Massen Füllstoffe (F) enthalten, handelt es sich um Mengen von vorzugsweise 0,1 bis 70 Gew.-%, besonders bevorzugt 1 bis 50 Gew.-%, insbesondere 10 bis 30 Gew.-%, jeweils bezogen auf das Gewichtsgewicht der erfindungsgemäßen Masse. Die erfindungsgemäßen Massen enthalten bevorzugt Füllstoffe (F).

Beispiele für gegebenenfalls eingesetzte Komponenten (G) sind alle weiteren Zusatzstoffe, die auch bisher zur Herstellung von additionsvernetzbaren Zusammensetzungen eingesetzt wurden, wie harzartige Polyorganosiloxane, die von den Siloxanen (A), (B) und (C) verschieden sind, Fungizide, Duftstoffe, organische rheologische Additive, Korrosionsinhibitoren, Oxidationsinhibitoren, Lichtschutzmittel, die von den Füllstoffen (F) verschieden sind, organische flammabweisend machende Mittel und Mittel zur Beeinflussung der elektrischen Eigenschaften, die von den Füllstoffen (F) verschieden sind, Dispergierhilfsmittel, Lösungsmittel, Haftvermittler, Pigmente, Farbstoffe, Weichmacher, die von den Siloxanen (A), (B) und (C) verschieden sind, organische Polymere und Hitzestabilisatoren.

Bei den Zusatzstoffen (G) handelt es sich bevorzugt um harzartige, aliphatisch gesättigte Polyorganosiloxane frei von Si-gebundenem Wasserstoff, organische Lösungsmittel, Haftvermittler, Pigmente oder Farbstoffe.

Falls die erfindungsgemäßen Massen Zusatzstoffe (G) enthalten, handelt es sich um Mengen von vorzugsweise 1 bis 30 Gew.-%, besonders bevorzugt 1 bis 20 Gew.-%, insbesondere 1 bis 5 Gew.-%, jeweils bezogen auf das Gesamtgewicht der erfindungsgemäßen Masse.

In einer bevorzugten Ausführungsform der Erfindung werden zur Herstellung der erfindungsgemäßen Massen Säurefänger (H) eingesetzt, vorzugsweise mindestens in einer stöchiometrischen Menge zum Gehalt starker Säuren (S).

Als Säurefänger (H) können alle Stoffe verwendet werden, die zur Reduktion des Gehalts starker Säuren (S) der vernetzbaren Massen geeignet sind, wobei weder die Säurefänger selbst noch ihre Reaktionsprodukte mit starken Säuren einen negativen Einfluss auf die Vernetzung der Massen haben dürfen.

Bevorzugt handelt es sich bei den erfindungsgemäß gegebenenfalls eingesetzten Säurefängern (H) um Metallcarbonate, Metallcarboxylate oder basische Phosphonate, besonders bevorzugt um Metallcarbonate oder Metallcarboxylate, insbesondere um Metallcarboxylate.

Beispiele für Säurefänger (H) sind Natriumhydrogencarbonat, Lithiumstearat, Zinkstearat, Zinkundecenylat, Calcium-2-ethylhexanoat, Calcium-Aluminium-Hydroxy-Carbonat, Dinatriumhexadecylphosphonat, Kaliumcitrat, Magnesiumlactat und Natriumstearoyl-2-lactylat.

Zur Herstellung der erfindungsgemäßen Massen werden bevorzugt Säurefänger (H) eingesetzt.

Falls die erfindungsgemäßen Massen Säurefänger (H) enthalten, handelt es sich um Mengen von vorzugsweise 0,001 bis 3 Gew.-%, besonders bevorzugt 0,01 bis 1 Gew.-%, insbesondere 0,05 bis 0,1 Gew.-%, jeweils bezogen auf das Gewichtsgewicht der erfindungsgemäßen Masse. Die erfindungsgemäßen Massen enthalten bevorzugt Säurefänger (H).

Die Komponenten (A), (B) und (C) sowie (E), (F), (G) und (H) sind bevorzugt unterhalb von 400 nm, besonders bevorzugt von 200 nm bis 400 nm, transparent, so dass eine lichtinduzierte Vernetzung der Massen durch Aktivierung des Katalysators (D) erfolgen kann.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Die erfindungsgemäßen Massen können, falls erforderlich, in Flüssigkeiten gelöst, dispergiert, suspendiert oder emulgiert werden.

Die erfindungsgemäßen Massen können - insbesondere je nach Viskosität der Bestandteile sowie Füllstoffgehalt - niedrigviskos und gießbar sein, eine pastöse Konsistenz aufweisen, pulverförmig sein oder auch geschmeidige, hochviskose Massen darstellen, wie dies bekanntermaßen bei den in Fachkreisen häufig als RTV-1, RTV-2, LSR und HTV bezeichneten Zusammensetzungen der Fall sein kann. Insbesondere können die erfindungsgemäßen Massen, falls sie hochviskos sind, in Form eines Granulates zubereitet werden. Hierbei kann das einzelne Granulatteilchen alle Komponenten enthalten, oder die erfindungsgemäß eingesetzten Komponenten sind getrennt in verschiedenen Granulatteilchen eingearbeitet. Hinsichtlich der elastomeren Eigenschaften der vernetzten erfindungsgemäßen Siliconzusammensetzungen wird gleichfalls das gesamte Spektrum umfasst, beginnend bei extrem weichen Silicongelen über gummiartige Materialien bis hin zu hochvernetzten Siliconen mit glasartigem Verhalten.

Die Herstellung der erfindungsgemäßen Massen kann nach beliebiger und an sich bekannter Art und Weise erfolgen, wie etwa nach Methoden und Mischverfahren, wie sie zur Herstellung von additionsvernetzenden Zusammensetzungen üblich sind.

Ein weiterer Gegenstand der vorliegenden Erfindung ist ein Verfahren zur Herstellung der erfindungsgemäßen Massen durch Mischen der einzelnen Komponenten in beliebiger Reihenfolge.

Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 30 bis 130°C. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen.

Das erfindungsgemäße Vermischen erfolgt bevorzugt unter Ausschluss von Feuchtigkeit und Licht mit einer Wellenlänge von kleiner 500 nm.

Das erfindungsgemäße Verfahren kann kontinuierlich oder diskontinuierlich durchgeführt werden.

In einer bevorzugten Ausführungsform des erfindungsgemäßen Verfahrens wird Platinkatalysator (D) mit einer Mischung aus (A), (B), gegebenenfalls (E), (F), (G) und (H) gleichmäßig vermischt. Der erfindungsgemäß eingesetzte Platinkatalysator (D) kann dabei als Substanz oder als Lösung - in einem geeigneten Lösungsmittel gelöst - oder als sogenannter Batch - gleichmäßig mit einer geringen Menge (A) oder (A) mit (E) vermischt - eingearbeitet werden.

Falls Säurefänger (H) eingesetzt wird, kann dieser entweder mit den einzelnen Bestandteilen der erfindungsgemäßen Masse in einem separaten Prozess vermischt werden oder der Mischung von mehreren Bestandteilen der Zubereitung zugesetzt werden. So kann Säurefänger (H) beispielsweise mit einer Mischung aus (A), (B), gegebenenfalls (E), (F), (G) gleichmäßig vermischt werden und danach der erfindungsgemäß eingesetzte Platinkatalysator (D) als Substanz oder als Lösung - in einem geeigneten Lösungsmittel gelöst - oder als sogenannter Batch - gleichmäßig eingemischt werden. Bei diesem Verfahren verbleibt (H) und/oder dessen Folgeprodukte mit starken Säuren in der Masse.

Säurefänger (H) kann auch so eingesetzt werden, dass er wie beschrieben mit den einzelnen Bestandteilen der erfindungsgemäßen Masse in einem separaten Prozess vermischt wird oder der Mischung von mehreren Bestandteilen der Zubereitung zugesetzt wird. Nach einer gewissen Zeit wird überschüssiger Säurefänger (H) zusammen mit den mit der Säure (S) gebildeten Folgeprodukten aus der Mischung entfernt. Zur einfacheren Vermischung und zur besseren Abtrennbarkeit von Säurefänger (H) und/oder deren Folgeprodukte, z.B. durch Filtration, kann der Mischung mit Säurefänger (H) und/oder deren Folgeprodukte ein geeignetes Lösungsmittel zugesetzt werden, in dem Säurefänger (H) und deren Folgeprodukte nicht löslich sind. Bei dieser Verfahrensvariante werden erfindungsgemäße Massen erhalten, die keinen oder nur noch Spuren Säurefänger (H) und/oder deren Folgeprodukte enthalten.

Bei den erfindungsgemäßen Zusammensetzungen kann es sich sowohl um Einkomponenten-Siliconzusammensetzungen als auch Zweikomponenten-Siliconzusammensetzungen handeln. In letzterem Fall können die beiden Komponenten der erfindungsgemäßen Zusammensetzungen alle Bestandteile in beliebigen Mengenverhältnissen enthalten, wobei bevorzugt eine Komponente den Platinkatalysator (D) und keine Si-H-haltige Komponente (B) oder (C) enthält.

Die erfindungsgemäßen durch Anlagern von Si-gebundenem Wasserstoff an aliphatische Mehrfachbindung vernetzbaren Massen können unter den gleichen Bedingungen vernetzen gelassen werden, wie die bisher bekannten durch Hydrosilylierungsreaktion vernetzbaren Zusammensetzungen.

Vorzugsweise wird die Vernetzung bei einem Druck von 30 bis 250 000 hPa, insbesondere beim Druck der umgebenden Atmosphäre, also etwa 900 bis 1100 hPa, oder bei Drücken wie sie in einer Spritzgussmaschine üblich sind, also ca. 200 000 hPa durchgeführt.

Vorzugsweise wird die Vernetzung bei einer Temperatur von 0 bis 100°C, insbesondere bei 10 bis 50°C, durchgeführt.

Erfindungsgemäß wird die Vernetzung durch Bestrahlung, besonders durch ultraviolette Strahlung (UV) bei 230 bis 400 nm, insbesondere 250 bis 350 nm, initiiert. Abhängig von der Formulierung, dem Katalysator und der Intensität der UV-Strahlung kann die nötige Bestrahlungszeit bevorzugt weniger als 1 Minute, besonders bevorzugt weniger als 1 Sekunde betragen. Jede Strahlungsquelle, die Strahlungsanteile unter ungefähr 400 nm hat, kann benutzt werden. Wellenlängen kleiner 230 nm sind bevorzugt nicht zu verwenden. Konventionelle Nieder-, Mittel- und Hochdruckquecksilberlampen sind geeignet. Strahlungsquellen, wie Leuchtstoffröhren und "Schwarzlichtlampen", sind ebenfalls geeignet.

Die nötige Strahlungsdichte hängt von vielen Faktoren ab und entspricht der von vernetzbaren Systemen enthaltend z.B. Cp'PtMe₃, die dem Stand der Technik entsprechen. So beträgt die nötige Strahlungsdosis für die kommerziell erhältliche Siliconzusammensetzung SEMICOSIL^{®} 912 / ELASTOSIL^{®} CAT UV (10:1), im Wellenlängenbereich 250 bis 350 nm (erzeugt durch z.B. Fe-dotierten Quecksilberstrahler) 1,5 J/cm² für 2 Minuten, was einer Strahlungsdichte von 180 mW/cm² entspricht.

Ein weiterer Gegenstand der vorliegenden Erfindung sind Formkörper hergestellt durch Vernetzung der erfindungsgemäßen Massen.

Die erfindungsgemäßen Massen sowie die erfindungsgemäß daraus hergestellten Vernetzungsprodukte können für alle Zwecke eingesetzt werden, für die auch bisher zu Elastomeren vernetzbare Organopolysiloxanzusammensetzungen bzw. Elastomere verwendet wurden. Dies umfasst beispielsweise die Siliconbeschichtung bzw. Imprägnierung beliebiger Substrate, die Herstellung von Formteilen, beispielsweise im Spritzgussverfahren, Vakuumextrusionsverfahren, Extrusionsverfahren, Formgießen und Formpressen, und Abformungen, die Verwendung als Dicht-, Einbett- und Vergussmassen usw.

Die erfindungsgemäßen vernetzbaren Massen haben den Vorteil, dass sie in einem einfachen Verfahren unter Verwendung leicht zugänglicher Ausgangsstoffe und damit wirtschaftlich hergestellt werden können.

Die erfindungsgemäßen vernetzbaren Zusammensetzungen haben den weiteren Vorteil, dass sie als einkomponentige Formulierung bei 25°C und Umgebungsdruck eine gute Lagerstabilität aufweisen und erst bei Bestrahlung durch sichtbare oder ultraviolette Strahlung vernetzen. Die Vernetzungsdauer ist insbesondere abhängig von der Dauer und der Intensität der Strahlung.

Die erfindungsgemäßen Massen haben ferner den Vorteil, dass diese bei zweikomponentiger Formulierung nach Vermischen der beiden Komponenten eine vernetzungsfähige Siliconmasse ergeben, deren Verarbeitbarkeit über einen langen Zeitraum hinweg bei 25°C und Umgebungsdruck bestehen bleibt, also extrem lange Topfzeit zeigen, und erst bei Bestrahlung vernetzt.

Die vorliegende Erfindung hat den großen Vorteil, dass sie bei allen bekannten Formulierungen angewendet werden kann und auf einfache Weise lichtvernetzbare Massen mit einer hervorragenden Dunkelstabilität hergestellt werden können.

Ferner besteht ein Vorteil darin, dass keine exakt stöchiometrische Zugabe der Säurefänger in Bezug auf den Gehalt an starken Säuren der Zusammensetzungen nötig ist.

Die erfindungsgemäßen Zusammensetzungen haben des Weiteren den Vorteil, dass die daraus erhaltenen vernetzten Siliconkautschuke eine ausgezeichnete Durchsichtigkeit aufweisen.

Die erfindungsgemäßen Zusammensetzungen haben ferner den Vorteil, dass die Hydrosilylierungsreaktion sich nicht mit der Reaktionsdauer verlangsamt und nicht zwangsläufig nach Ende der Bestrahlung abbricht. Es härten auch Bereiche aus, die nicht direkt belichtet wurden, was besonders bei detailgetreuen Abformungen oder beim Verguss elektronischer Bauteile von Vorteil ist. Durch Temperaturerhöhung kann die Vernetzung nicht initiiert aber beschleunigt werden.

Die erfindungsgemäßen Massen, insbesondere bei Verwendung der Säurefänger (H), zeigen gegenüber den bisher verwendeten Systemen den Vorteil, dass sie eine bessere Dunkelstabilität, also eine lange Lagerstabilität vernetzbarer Zubereitungen bewirken.

Im Rahmen der vorliegenden Erfindung werden von dem Begriff Organopolysiloxane sowohl polymere, oligomere als auch dimere Siloxane umfasst.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

In den nachfolgenden Beispielen werden die Säurekonzentrationen der Zusammensetzungen in Anlehnung an ASTM D974 bestimmt. Durch eine dem Fachmann zumutbare Auswahl geeigneter Indikatoren (z.B. Chinaldinrot, 4-o-Tolylazo-o-toluidin, Benzylorange, Tropäolin, Tetrabromphenolphthaleinethylester) wird ein photometrisch bestimmbarer Neutralisationspunkt festgelegt, bei dem die Konzentration aller Säuren mit einem pKs-Wert < 2,5 erfasst ist.

Der pKs-Wert ist der pKs-Wert, den die Säuren in wässeriger Lösung haben.

Folgende Abkürzungen werden verwendet: Me ist gleich Methylrest und Vi gleich Vinylrest.

IR-Spektroskopie:
Die Entwicklung des Gehalts an Si-H-Gruppen wird mittels Insitu-Fourier-Transformations-IR-Spektroskopie (FTIR) bestimmt.
Die Si-H Gruppe besitzt eine starke Bande im Bereich 2280-2080 cm⁻¹. Verwendet wurde das Gerät ReactIR 15 der Firma Mettler Toledo.

Die Prüfung der Vernetzbarkeit der Zusammensetzungen mittels UV-Strahlung erfolgte durch Bestrahlung einer 5 mm dicken Schicht der Masse für 10 Sekunden bei 2000 W im UV-Cube (Fa. Hoehnle; ca. 70 mW/cm²) mittels eines Eisenstrahlers der Wellenlänge 230-400 nm.

Aufgrund der Lichtempfindlichkeit der verwendeten Platinkatalysatoren wurden die Versuche in geeigneten Lichtverhältnissen durchgeführt ("Gelblichtraum", Transmission < 0,001% für λ < 470 nm), d.h. die Vermischung und Handhabung aller Komponenten außer den Platinkatalysatoren konnten ohne besondere Vorkehrungen bezüglich der Lichtverhältnisse durchgeführt werden. Die Einmischung der Platinkatalysatoren und die Lagerung von Mischungen, die Platinkatalysatoren enthielten, erfolgten unter den oben angegebenen speziellen Lichtverhältnissen oder komplett unter Lichtausschluss.

Die Mengenangabe der Platinkatalysatoren in den folgenden Beispielen bezieht sich auf den enthaltenen Platinanteil in Gew.-ppm.

### Beispiel 1

Es wird eine modellhafte Zusammensetzung beschleunigt, d.h. bei hoher Temperatur, gelagert. Unerwünscht ist eine schnelle Umsetzung der Siloxane durch Hydrosilylierung, nachweisbar durch Abnahme des Si-H-Gehaltes.

Ein Gemisch aus 1,1,1,2,3,3,3-Heptamethyltrisiloxan (mehrfach destilliert) und 1,1,1,2,3,3,3-Heptamethyl-2-vinyltrisiloxan (mehrfach destilliert) im Verhältnis von 1,5 mol/1,0 mol wird in einem Kolben unter Argon als Schutzgas vorgelegt und auf 100°C temperiert. Der Gehalt an HCl beträgt 0,0 ppm. Dazu werden 250 ppm CpMePtMe₃ gegeben. Der relative Gehalt von Si-H wird mittels ReactIR verfolgt bis keine Intensitätsabnahme feststellbar ist. Der Zeitpunkt, an dem 50% der gesamten Intensitätsabnahme (t_{50%}) erfolgt sind, beträgt 15 h.

Die Zusammensetzung weist eine gute Beständigkeit auf.

### Beispiel 2

Es wird wie in Beispiel 1 vorgegangen, nur werden 500 ppm Katalysator verwendet; t_{50%} beträgt 9,5 h. Die Zusammensetzung weist eine gute Beständigkeit auf.

### Beispiel 3

Es wird wie in Beispiel 1 vorgegangen, nur werden 1000 Gew.-ppm Ammoniumchlorid (pKₛ = 9,24) als Beispiel einer typischen Verunreinigung in Polydimethylsiloxanen zusätzlich zugegeben; t_{50%} beträgt 13 h. Die Zusammensetzung weist eine gute Beständigkeit auf.

### Vergleichsbeispiel 1

Es wird wie in Beispiel 1 vorgegangen, nur werden 1000 Gew.-ppm p-Toluolsulfonsäure (pKₛ = 0.7) zusätzlich zugegeben; t_{50%} beträgt 3,25 h. Die Zusammensetzung weist keine gute Beständigkeit auf.

### Vergleichsbeispiel 2

Es wird wie in Beispiel 1 vorgegangen, nur werden 1000 Gew.-ppm Brenztraubensäure (pKₛ = 2,4) zusätzlich zugegeben, t_{50%} beträgt 3,5 h. Die Zusammensetzung weist keine gute Beständigkeit auf.

### Beispiel 4

Es wird wie in Beispiel 1 vorgegangen, nur werden 20000 Gew.-ppm Kaliumdihydrogenphosphat (pKₛ = 6,82) als Beispiel einer typischen Verunreinigung in Polydimethylsiloxanen zusätzlich zugegeben; t_{50%} beträgt 13 h. Die Zusammensetzung weist eine gute Beständigkeit auf.

### Vergleichsbeispiel 3

Es wird wie in Beispiel 1 vorgegangen, nur werden 40 mg hydrophile pyrogene Kieselsäure (BET = 200 m²/g) / 4mL Siloxanmischung zusätzlich zugegeben (käuflich erhältlich unter der Bezeichnung HDK^{®} V15 bei Wacker Chemie AG), welche Spuren an Chlorwasserstoff (pKₛ < 1) in Mengen von 10⁻³ mmol/g enthält (pH-Wert bestimmt nach DIN EN ISO 787-9: 4, 04); t_{50%} beträgt 4,5 h. Die Zusammensetzung weist keine gute Beständigkeit auf.

### Vergleichsbeispiel 4

Eine Mischung aus 54,0 Gew.-Teilen ViMe₂Si-O-(Me₂SiO)ₙ-SiMe₂Vi (Viskosität 100000 mPas), 7,5 Gew.-Teilen ViMe₂Si-O-(Me₂SiO)ₙ-SiMe₂Vi (Viskosität 20000 mPas), 70 Gew.-Teilen ViMe₂Si-O-(Me₂SiO)ₙ-SiMe₂Vi (Viskosität 7000 mPas), 170 Gew.-Teilen ViMe₂Si-O-(Me₂SiO)ₙ-SiMe₂Vi (Viskosität 1000 mPas) und 44 Gew.-Teilen (Me₃SiO_{1/2})ₓ (ViMe₂SiO_{1/2})_{y}(SiO_{4/2})_{z} mit x+y/z = 0,7 und x/y = 7 (Mw 5300 g/ml, Mn 2400 g/mol) wird homogen gemischt. Weiterhin werden 3 Gew.-Teile Me₃Si-O[(Me₂SiO)ₓ (MeHSiO)_{y}]-SiMe₃ (x+y=50, x/y= 0,3/1, 1,1% Si-H), 15 Gew.-Teile HMe₂Si-O-(Me₂SiO)ₓ-SiHMe₂ (x =60, 0,045% Si-H) hinzugegeben. Der Gehalt an HCl wurde zu 1,7 Gew.-ppm bestimmt.

Es wurden 21,5 Gew.-Teile einer Lösung eines Katalysators Trimethyl[(3-bis(polydimethylsiloxy)methylsilyl)propyl-cyclopentadienyl]-platin (IV) in ViMe₂Si-O-[(Me₂SiO)ₙ]-SiMe₂Vi (Viskosität 1000 mPas) mit einem Pt-Gehalt von 300 Gew.-ppm eingemischt. Die Gesamtmischung hatte eine Startviskosität von 3761 mPas, nach 4 Tagen bei 25°C eine Viskosität von 7360 mPas, und war nach 7 Tagen bei 25°C unerwünscht vulkanisiert.

### Beispiel 5

100 Gew.-Teile einer Zusammensetzung nach Vergleichsbeispiel 4 vor Zugabe des Platinkatalysators wurden mit 100 Gew.-Teilen Ethylacetat verdünnt und mit 1,5 Gew.-Teile NaHCO₃ als Säurefänger für 1 h bei 25°C gerührt, es wurde filtriert und das flüchtige Lösungsmittel entfernt. Der Gehalt an HCl wurde zu 0,0 ppm bestimmt. Es wurden 21,5 Gew.-Teile einer Lösung eines Katalysators Trimethyl[(3-bis(polydimethylsiloxy)methylsilyl)-propyl-cyclopentadienyl]-platin(IV) in ViMe₂Si-O-[(Me₂SiO)ₙ]-SiMe₂Vi (Viskosität 1000 mPas) mit einem Pt-Gehalt von 300 Gew.-ppm eingemischt. Die Gesamtmischung hatte eine Startviskosität von 3176 mPas, und nach 6 Wochen bei 25°C betrug die Viskosität 3396 mPas.

Die Vernetzung mittels UV-Strahlung war nach 7 Tagen Lagerung bei 25°C erfolgreich. Es wurde ein elastomerer Formkörper erhalten.

### Vergleichsbeispiel 5

Eine Mischung aus 230 Gew.-Teilen ViMe₂Si-O-(Me₂SiO)ₙ-SiMe₂Vi (Viskosität 20000 mPas), 40 Gew.-Teilen ViMe₂Si-O-(Me₂SiO)ₙ-SiMe₂Vi (Viskosität 100 mPas) und 50 Gew.-Teilen einer hydrophoben pyrogenen Kieselsäure (BET = 300 m²/g, käuflich erhältlich unter der Bezeichnung HDK^{®} H30 bei Wacker Chemie AG) wird homogen gemischt. Weiterhin werden 9 Gew.-Teile Me₃Si-O-[(Me₂SiO)ₓ(MeHSiO)_{y}]-SiMe₃ (x+y=50, 1,1% Si-H), 2,5 Gew.-Teile Glycidoxypropyltrimethoxysilan und 5,0 Gew.-Teile Methacryloxytrimethoxysilan eingemischt. Dazu werden 17,7 Gew.-Teile einer Lösung von MeCpPtMe₃ in ViMe₂Si-O-[(Me₂SiO)ₙ]-SiMe₂Vi (Viskosität 1000 mPas) mit einem Platingehalt von 300 Gew.-ppm gegeben und eingemischt (Katalysatorgehalt der Gesamtmischung beträgt 15 Gew.-ppm). Der Säuregehalt beträgt 13,5 Gew.-ppm H⁺.

Die Viskosität wird zu 24200 mPas bestimmt. Nach 1/7 Tagen Lagerung bei 25°C beträgt die Viskosität 29440/30041 mPas.

Nach 7 Tagen Lagerung bei 25°C konnte keine vollständige Vernetzung mittels UV-Strahlung erreicht werden, es bildet sich eine klebrige Haut. Nach weiteren 24 h Lagerung bei 25°C ist unter der Haut unvernetztes Material zu finden.

### Beispiel 6

Es wird wie in Vergleichsbeispiel 5 vorgegangen, nur dass vor Zugabe des Katalysators 0,05 Gew.-Teile Zinkundecenylat eingemischt werden.

Die Viskosität wird zu 24000 mPas bestimmt. Nach 7/14/21 Tagen Lagerung bei 25°C beträgt die Viskosität 23813/24580/25901 mPas.

Die Vernetzung mittels UV-Strahlung war nach 8 Wochen Lagerung bei 25°C erfolgreich. Es wurde ein elastomerer Formkörper erhalten.

### Beispiel 7

Es wird wie in Vergleichsbeispiel 5 vorgegangen, nur dass vor Zugabe des Katalysators 0,1 Gew.-Teile Lithiumpalmitat eingemischt werden. Die Viskosität wird zu 24700 mPas bestimmt. Nach 7/14/21 Tagen Lagerung bei 25°C beträgt die Viskosität 23839/24762/26477 mPas.

Die Vernetzung mittels UV-Strahlung war nach 8 Wochen Lagerung bei 25°C erfolgreich. Es wurde ein elastomerer Formkörper erhalten.

## Patentansprüche

1. Platin katalysierte durch Hydrosilylierungsreaktion vernetzbare Massen, **dadurch gekennzeichnet, dass** der Gehalt starker Säuren (S) mit einem pKs-Wert < 2,5 kleiner 0,3 Gew.-ppm ist und dass es sich bei den Platinkatalysatoren um solche der Formel
R¹₃Pt{CpR²₅} (I)
handelt, wobei
**Cp** Cyclopentadienylrest bedeutet,
**R¹** gleich oder verschieden sein kann und einen monovalenten, gegebenenfalls substituierten, aliphatisch gesättigten Kohlenwasserstoffrest bedeutet und
**R²** gleich oder verschieden sein kann und Wasserstoffatom, SiCgebundener Silylrest oder einen einwertigen, gegebenenfalls substituierten Kohlenwasserstoffrest bedeutet.

2. Platin katalysierte durch Hydrosilylierungsreaktion vernetzbare Massen, **dadurch gekennzeichnet, dass** der Gehalt starker Säuren (S), ausgewählt aus Chlorwasserstoff, Methansulfonsäure, Trifluormethansulfonsäure, Schwefelsäure und säureaktivierter Bleicherden, kleiner 0,3 Gew.-ppm ist.

3. Massen gemäß Anspruch 1 oder 2, **dadurch gekennzeichnet, dass** der Gehalt starker Säuren (S) kleiner 0,2 Gew.-ppm beträgt.

4. Massen gemäß einem oder mehreren der Ansprüche 1 bis 3, **dadurch gekennzeichnet, dass** es sich um solche handelt, enthaltend
(i) mindestens eine Verbindung ausgewählt aus der Gruppe enthaltend die Verbindungen (A), (B) und (C), wobei
(A) eine organische Verbindung und/oder eine siliziumorganische Verbindung enthaltend mindestens einen Rest mit aliphatischer Kohlenstoff-Kohlenstoff-Mehrfachbindung,
(B) eine siliziumorganische Verbindung enthaltend mindestens ein Si-gebundenes Wasserstoffatom, und
(C) eine siliziumorganische Verbindung enthaltend SiC-gebundene Reste mit aliphatischen Kohlenstoff-Kohlenstoff-Mehrfachbindungen und Si-gebundene Wasserstoffatome bedeuten,
mit der Maßgabe, dass die Massen mindestens eine Verbindung mit aliphatischen Kohlenstoff-Kohlenstoff-Mehrfachbindungen und mindestens eine Verbindung mit Si-gebundenen Wasserstoffatomen enthält, und
(ii) mindestens einen
(D) Platinkatalysator,
mit der Maßgabe, dass der Gehalt starker Säuren (S) mit einem pKs-Wert < 2,5 kleiner 0,3 Gew.-ppm ist.

5. Massen gemäß einem oder mehreren der Ansprüche 1 bis 4, **dadurch gekennzeichnet, dass** sie als Bestandteil (A) mindestens eine aliphatisch ungesättigte Organosiliciumverbindung enthalten.

6. Massen gemäß einem oder mehreren der Ansprüche 1 bis 5, **dadurch gekennzeichnet, dass** sie Säurefänger (H) enthalten.

7. Massen gemäß Anspruch 6, **dadurch gekennzeichnet, dass** es sich bei den Säurefängern (H) um Metallcarbonate, Metallcarboxylate oder basische Phosphonate handelt.

8. Verfahren zur Herstellung der Massen gemäß einem oder mehreren der Ansprüche 1 bis 7 durch Mischen der einzelnen Komponenten in beliebiger Reihenfolge.

9. Formkörper hergestellt durch Vernetzung der Massen gemäß einem oder mehreren der Ansprüche 1 bis 7 oder hergestellt nach Anspruch 8.

## Claims

1. Platinum-catalyzed compositions crosslinkable by hydrosilylation reaction, **characterized in that** the content of strong acids (S) having a pKa of < 2.5 is less than 0.3 ppm by weight and **in that** the platinum catalysts are those of the formula
R¹₃Pt{CpR²₅} (I),
where
**Cp** is the cyclopentadienyl radical,
**R¹** may be identical or different and is a monovalent, optionally substituted, aliphatically saturated hydrocarbon radical, and
**R²** may be identical or different and is a hydrogen atom, SiC-bonded silyl radical or a monovalent, optionally substituted hydrocarbon radical.

2. Platinum-catalyzed compositions crosslinkable by hydrosilylation reaction, **characterized in that** the content of strong acids (S), selected from hydrogen chloride, methanesulfonic acid, trifluoromethanesulfonic acid, sulfuric acid, and acid-activated bleaching earths, is less than 0.3 ppm by weight.

3. Compositions according to Claim 1 or 2, **characterized in that** the content of strong acids (S) is less than 0.2 ppm by weight.

4. Compositions according to one or more of Claims 1 to 3, **characterized in that** they are compositions comprising
(i) at least one compound selected from the group comprising the compounds (A), (B), and (C), where
(A) is an organic compound and/or an organosilicon compound containing at least one radical having an aliphatic carbon-carbon multiple bond,
(B) is an organosilicon compound containing at least one Si-bonded hydrogen atom, and
(C) is an organosilicon compound containing SiC-bonded radicals having aliphatic carbon-carbon multiple bonds and Si-bonded hydrogen atoms,
with the proviso that the compositions comprise at least one compound having aliphatic carbon-carbon multiple bonds and at least one compound having Si-bonded hydrogen atoms, and
(ii) at least one
(D) platinum catalyst,
with the proviso that the content of strong acids (S) having a pKa of < 2.5 is less than 0.3 ppm by weight.

5. Compositions according to one or more of Claims 1 to 4, **characterized in that** they comprise as constituent (A) at least one aliphatically unsaturated organosilicon compound.

6. Compositions according to one or more of Claims 1 to 5, **characterized in that** they comprise acid scavengers (H) .

7. Compositions according to Claim 6, **characterized in that** the acid scavengers (H) are metal carbonates, metal carboxylates or basic phosphonates.

8. Process for producing the compositions according to one or more of Claims 1 to 7 by mixing the individual components in any desired order.

9. Shaped body produced by crosslinking the compositions according to one or more of Claims 1 to 7 or produced according to Claim 8.

## Revendications

1. Masses catalysées au platine, réticulables par une réaction d'hydrosilylation, **caractérisées en ce que** la teneur en acides forts (S) présentant une valeur pKₐ < 2,5 est inférieure à 0,3 ppm en poids et **en ce qu'**il s'agit, pour les catalyseurs au platine, de ceux de formule
R¹₃Pt{CpR²₅} (I)
où
Cp signifie un radical cyclopentadiényle,
R¹ peut être identique ou différent et signifie un radical hydrocarboné monovalent, le cas échéant substitué, aliphatiquement saturé et
R² peut être identique ou différent et signifie un atome d'hydrogène, un radical silyle lié par SiC ou un radical hydrocarboné monovalent, le cas échéant substitué.

2. Masses catalysées au platine, réticulables par une réaction d'hydrosilylation, **caractérisées en ce que** la teneur en acides forts (S), choisis parmi l'acide chlorhydrique, l'acide méthanesulfonique, l'acide trifluorométhanesulfonique, l'acide sulfurique et les terres de blanchiment activées à l'acide, est inférieure à 0,3 ppm en poids.

3. Masses selon la revendication 1 ou 2, **caractérisées en ce que** la teneur en acides forts (S) est inférieure à 0,2 ppm en poids.

4. Masses selon l'une ou plusieurs des revendications 1 à 3, **caractérisées en ce qu'**il s'agit de celles contenant
(i) au moins un composé, choisi dans le groupe contenant les composés (A), (B) ou (C), où
(A) signifie un composé organique et/ou un composé organosilicié, contenant au moins un radical présentant une liaison carbone-carbone aliphatique multiple,
(B) signifie un composé organosilicié, contenant au moins un atome d'hydrogène lié par Si et
(C) signifie un composé organosilicié, contenant des radicaux liés par SiC présentant des liaisons carbone-carbone aliphatiques multiples et des atomes d'hydrogène liés par Si,
à condition que les masses contiennent au moins un composé présentant des liaisons carbone-carbone aliphatiques multiples et au moins un composé présentant des atomes d'hydrogène liés par Si et
(ii) au moins un
(D) catalyseur au platine,
à condition que la teneur en acides forts (S) présentant une valeur pKₐ < 2,5 soit inférieure à 0,3 ppm en poids.

5. Masses selon l'une ou plusieurs des revendications 1 à 4, **caractérisées en ce qu'**elles contiennent comme constituant (A) au moins un composé organosilicié aliphatiquement insaturé.

6. Masses selon l'une ou plusieurs des revendications 1 à 5, **caractérisées en ce qu'**elles contiennent des pièges d'acide (H).

7. Masses selon la revendication 6, **caractérisées en ce qu'**il s'agit, pour les pièges d'acide (H), de carbonates métalliques, de carboxylates métalliques ou de phosphonates basiques.

8. Procédé pour la préparation des masses selon l'une ou plusieurs des revendications 1 à 7 par mélange des différents composants dans un ordre quelconque.

9. Corps façonnés, fabriqués par réticulation des masses selon l'une ou plusieurs des revendications 1 à 7 ou préparées selon la revendication 8.
